# EUROPEAN PATENT APPLICATION

(11) **EP 1 916 602 A1**
(43) Date of publication of application: **30.04.2008**
(21) Application number: 06022422.7
(22) Date of filing: 26.10.2006
(51) Int. Cl.: G06F 11/14

(54) **Recovery based on ordered restart of processes**

(71) Applicant: Nokia Siemens Networks GmbH & Co. KG, 81541 München (DE)
(72) Inventor: Hiller, Margit, 82152 Krailling (DE); Weiss, Richard, 81371 München (DE)

(57) **Abstract**

The invention concerns a method (Fig. 2, "soft recovery") for a recovery within a telecommunication network system by restarting a plurality of application processes within a component or module ("blade") of the telecommunication network system, wherein, wherein when recovery is triggered, all the start-up groups (Fig. 2, start-up group n , start-up group n-1, start-up group ... above demarcation group, demarcation group) are terminated in the reverse order of their later restart,
and then starting with processes of a predefined start-up group (Fig. 2, demarcation group),
application processes assigned to a start-up group (Fig. 2, start-up group n with start-up number n) are respectively restarted after application processes of all start- up groups (Fig. 2, demarcation group, start-up group...above demarcation group, start-up group n-1) with a lower assigned start-up-number (n-1, ...) are restarted.

## Description

The invention concerns methods and devices for recovering a telecommunication network system.

**The following technical problem is the background for the invention:**
Modern telecommunication platforms as used in mobile networks have a high demand for uninterrupted availability and serviceability. Preventing service loss is a crucial requirement for system maintenance components. Among the features to ensure utmost availability is e.g. flexible and intelligent handling of redundant resources and an efficient independent error recovery concept.
Due to high availability requirements, systems are expected to recover automatically from error situations. The term "recovery" indicates a set of actions designed to keep the system in service or restore it to service.
Error recovery concepts need to consider two diametrical requirements:
   a) maximize probability to solve the underlying error situation
   b) minimize impact on system serviceability, i.e. minimize service loss.
Therefore, a recovery escalation concept was introduced with recovery operations on process, blade and system level.
On the one hand, single process restart is a very fast recovery action but it depends on the application architecture if it is likely to be successful. It works fine for applications that have a well-separated, independent process scheme. In fact, however, applications tend to feature processes that are closely interacting with each other or dependent on each other. Restart of a single process might even not be possible without heavy impact on related processes.
   Performing a full blade recovery would overcome these process dependencies but is considered far too time- consuming for a low-level recovery as it encompasses a full restart of all SW components such as operating system and middleware SW. Furthermore, the restart of a whole blade might seriously impact overall system operability for quite a while.

### The problem been solved up to now as follows:

There are recovery actions on process and blade level. All processes are treated alike, inter-process dependencies are not taken into consideration. It is left to the application provider to deal with single process restarts in an appropriate manner.

### The following technical features of the invention can solve the problem named above:

To combine the advantages of single process recovery (fast) and full blade recovery (effective), the so-called "soft recovery" mechanism was introduced, i.e. a **restart of a flexible number of application processes without** restart of basic SW components (e.g. operating system). Application processes are organized in hierarchical start- up groups. Processes *within* one start-up group are started simultaneously while processes of a higher start-up group only commence starting as soon as the processes of the lower start-up group communicate start-up completion.

A dedicated start-up group serves as flexible "demarcation line" between processes that take part in "soft recovery" operations and processes that don't.
When a "soft recovery" operation is triggered, all participating processes are terminated in the reverse order of their start-up sequence (till the "demarcation line" is met) and restarted acc. to their startup-up dependencies.
For termination, two modes are available: either processes are terminated by a "hard kill" or by a "graceful shutdown" that grants processes a certain period of time for clean-up tasks before the actual termination. The termination mode may be selected by configuration means acc. to performance and/or safety requirements.
During process restarts, process message queues may be kept or discarded - according to configured restart mode.

It is an object of the invention to improve the performance of telecommunication systems recovery operations. The object is respectively achieved by the invention defined in the claims.

### The following advantages are gained by the technical features of the invention:

o Process dependencies are fully taken into account
o Stable SW components such as operating system, middleware SW and other off-the-shelf SW are not restarted, i.e. time consumption of a soft recovery operation is considerably smaller than that of a full blade restart
o Number of participating/restarting processes can be limited by flexible "demarcation line"
o Lowest recovery operation (single process recovery or soft recovery) may be selected by configuration (depending on application needs)
o Two methods for application process termination: hard "kill" (fast) or "graceful" termination (safe)

A possible implementation of the invention is explained in the following description of the enclosed drawings. In the drawings
Fig 1 shows an example of a full blade (complete) restart within a telecommunication system in case of e.g. an error situation.
Fig 2 shows an example of a "soft recovery" within a telecommunication system according to the invention.

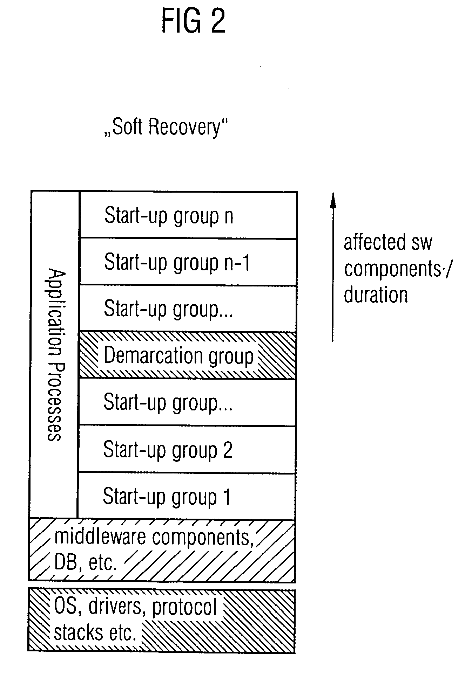

The term "blade" in the following can mean any component, e.g. any pluggable computer unit with a complete software module (including everything from OS to application processes) of a telecommunication system.
The term ""start- up group" defines a group of processes which are all restarted before and/or after the processes of other start-up groups. E.g. all processes of start-up group n-1 in Fig.2 are started before the processes of start- up group n in Fig.2 are started, but processes of start- up group n-1 are started after processes of start- up group ... in Fig.2 are started.

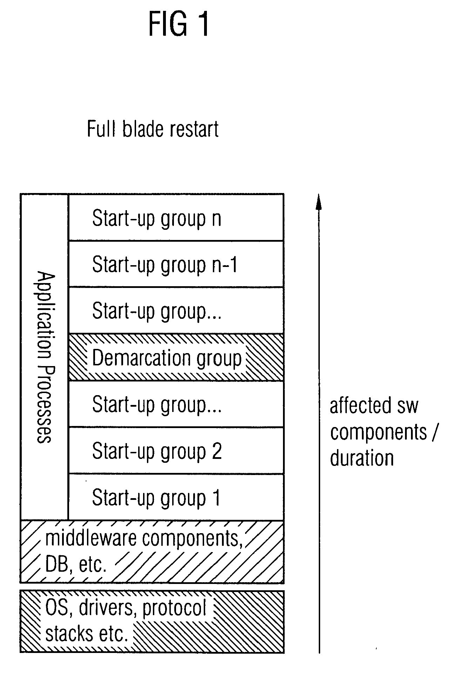

Fig. 1 shows a full blade recovery as described above.
Before a full blade recovery the shown "blade" is completely terminated.
After this termination, the OS, drivers, protocol stacks etc processes are restarted, then the middleware components, DB etc processes are restarted,
Then the application processes of start- up group lare restarted.
After the application processes of start- up group 1 are restarted,
the application processes of start- up group 2 are restarted, etc;
the application processes of start- up group n are restarted last.
Therefore the number of affected components and duration is relatively high.
(The name "demarcation group" in Fig. 1 has no meaning, it only is a demarcation in Fig. 2, whereas in Fig.1 it is just any start- up group.)

Fig. 2 shows an inventive recovery ("soft recovery").
A termination and restart of the OS, drivers, protocol stacks, middleware components, DB etc processes, can be generally avoided in a "soft recovery" according to the invention.
Processes are terminated, group by group, starting with the processes in the start-up group n (on top in Figure 2), followed by the processes in the start-up group n-1. The processes in the group named "demarcation group" in Figure 2 are terminated last.

Then the processes are restarted, starting with the processes in the start up demarcation group. After the processes in the start up demarcation group, the processes in "start- up group..." (the upper one of the processes named "start- up group..." in the figures above the demarcation group is meant with this expression) are restarted. After the processes in "start- up group...", the processes in "start- up group n-1" are restarted. After the processes in "start- up group n-1", the processes in "start- up group n" are restarted.
The demarcation line (i.e. the start- up group "demarcation group") can be chosen flexibly, e.g. based on experience or details of the analyzed error situation triggering the recovery.
The arrow in Fig. 2 does not indicate the order of termination of the start-up groups,
it only indicates the order of restart of the start-up groups.

Thus the number of affected components and duration is lower than in a full blade recovery.

## Claims

1. Method (Fig. 2, "soft recovery") for a recovery within a telecommunication network system by restarting a plurality of application processes within a component or module ("blade") of the telecommunication network system,
wherein,
wherein when a recovery is triggered,
start-up groups (Fig. 2, start-up group n , start-up group n-1, start-up group ... above demarcation group, demarcation group) are terminated, in the reverse order of their later restart, until a predefined demarcation group is terminated,
and then for a restart,
starting with processes of a predefined start-up group (Fig. 2, demarcation group),
application processes assigned to a start-up group (Fig. 2, start-up group n with start-up number n) are respectively restarted after application processes of all start- up groups (Fig. 2, demarcation group, start- up group...above demarcation group, start-up group n-1), terminated before, and with a lower assigned start-up-number (n-1, ...), are restarted.

2. Method according to claim 1,
wherein when recovery is triggered,
all the start-up groups are terminated in the reverse order of their later restart, before restart of the start-up groups.

3. Method according to claim 2,
wherein for termination, two modes are available,
wherein according to one mode processes are terminated by a "hard kill",
wherein according to the other mode the termination grants processes a certain period of time for clean-up tasks before the actual termination.

4. Method according to claim 2,
wherein the termination mode may be selected by configuration means according to performance and/or safety requirements.

5. Method according to any of the preceding claims,
wherein during process restarts, process message queues may be kept or discarded according to the configured restart mode.

6. Telecommunication network system
providing a recovery (Fig. 2, "soft recovery") within the telecommunication network system by restarting a plurality of application processes within a component or module ("blade") of the telecommunication network system,
with a module
- for terminating all the start-up groups (Fig. 2, start-up group n , start-up group n-1, start-up group ... above demarcation group, demarcation group) in the reverse order of their later restart, before restart of the start-up groups,
- and for restarting,
starting with processes of a predefined start-up group
(Fig. 2, demarcation
group),
application processes assigned to a start-up group (Fig. 2, start-up group n with a start-up number "n"), respectively after restart of application processes of all start- up groups (Fig. 2, demarcation group, start- up group...above demarcation group, start-up group n-1) with a lower assigned start-up-number (n-1, ...).
